# EUROPÄISCHE PATENTSCHRIFT

(11) **EP 2 809 531 B1**
(45) Veröffentlichungstag und Bekanntmachung des Hinweises auf die Patenterteilung: **10.08.2016**
(21) Anmeldenummer: 13701974.1
(22) Anmeldetag: 23.01.2013
(51) Int. Cl.: B60G 7/00, B60G 11/16, B21D 53/88

(54) **EINSCHALIGER FEDERLENKER**
SINGLE SHELL SPRING LINK
BRAS MONOBLOQUE

(30) Priorität: 30.01.2012 DE 102012100719
(43) Veröffentlichungstag der Anmeldung: 10.12.2014
(73) Patentinhaber: Gestamp Umformtechnik GmbH, 33647 Bielefeld (DE)
(72) Erfinder: HASELHORST, Kai, 33775 Versmold (DE); KOORMANN, Ralf, 33818 Leopoldshöhe (DE); BUCHHOLZ, Mathias, 33615 Bielefeld (DE); HERTL, Ronald, 33619 Bielefeld (DE)
(74) Vertreter: Cohausz & Florack
(86) Internationale Anmeldenummer: PCT/EP2013/051192
(87) Internationale Veröffentlichungsnummer: WO 2013/113591

(56) Entgegenhaltungen:
- EP-A1- 1 642 754
- EP-A2- 1 223 058
- WO-A2-2010/004414
- DE-A1- 10 241 406
- DE-A1-102004 008 957
- DE-A1-102006 014 730
- DE-A1-102006 032 595
- DE-A1-102008 013 182
- DE-A1-102011 000 462
- JP-A- 2002 316 228

## Beschreibung

Die Erfindung betrifft einen aus Stahlblech geformten einschaligen Federlenker für eine Radaufhängung eines Kraftfahrzeuges, mit einem ersten Endabschnitt zur Anbindung an einem Fahrwerksträger, vorzugsweise einem Hinterachsträger, einem zweiten Endabschnitt zur radseitigen Anbindung und einem zwischen den beiden Endabschnitten angeordneten breitenerweiterten Abschnitt, der einen Rücken mit davon abstehenden Flanken aufweist und einen Federsitz zur Abstützung einer Feder definiert.

Federlenker dienen der Führung eines Fahrwerkrades an einer Radaufhängung eines Kraftfahrzeuges. Sie weisen einen Abschnitt zur Abstützung einer Feder oder einer Feder-Stoßdämpfer-Anordnung auf, die ihrerseits gegen die Karosserie abgestützt ist.

Federlenker unterliegen im Fahrbetrieb oft hohen wechselnden Belastungen. Bei nicht ausreichender Steifigkeit des Federlenkers kann es insbesondere im Bereich der Federauflage zu einer Aufweitung bzw. Verformung des Federlenkers kommen. Um eine hohe Belastbarkeit im Bereich der Federauflage zu erzielen, sind bekannte aktuelle Federlenker mit einem oder mehreren verstärkenden Zusatzblechen versehen. Als verstärkende Zusatzbleche werden beispielsweise topfförmige Schalen im Bereich der Federauflage in den breitenerweiterten Abschnitt des Federlenkers eingesetzt. Des Weiteren sind mehrschalige Federlenker bekannt, die im Bereich der Federauflage ein die Feder umschließendes Schließblech aufweisen, das mit den beiden Flanken einer rinnenförmigen Federlenkerschale verschweißt ist.

Aus der DE 10 2004 008 957 A1 ist ein Federlenker für eine Radaufhängung bekannt, der aus einer Federlenkerschale gebildet ist, welche ein im Wesentlichen U-förmiges Profil aufweist, wobei das U-förmige Profil an seiner offenen Seite zwei beidseits der Federauflagefläche angeordnete sichelförmige Brückenbleche aufweist, die durch Nieten, Schrauben oder Schweißverbindungen an der Federlenkerschale befestigt sind.

Die Herstellung und Eingliederung der zusätzlichen Schalen bzw. Schließ- und Überbrückungsbleche erfordert entsprechende Fertigungsschritte, was hinsichtlich der Herstellungskosten ungünstig ist. Zudem besitzen bekannte mehrschalige Federlenker aufgrund ihrer verstärkenden Zusatzbleche mitunter ein relativ hohes Bauteilgewicht.

Aus der DE 10 2006 032 595 A1 ist ein einschaliger Federlenker bekannt, dessen einstückig ausgebildete Federlenkerschale einen ersten Endabschnitt zur fahrzeugaufbauseitigen Anbindung, einen zweiten Endabschnitt zur radseitigen Anbindung und einen breitenerweiterten Abschnitts zur Abstützung einer Feder aufweist. Der breitenerweiterte Abschnitt besitzt ein U-förmiges Profil, dessen freie Enden jeweils zu einem Kragen (Flansch) nach außen gebogen sind. Ferner weist der breitenerweiterte Abschnitt eine nach außen ausgestülpte Ringfläche als Federsitz auf. Zur besseren Zentrierung der Feder ist innerhalb der Ringfläche eine nach innen gerichtete Erhebung ausgeformt, die mit einer zentralen Öffnung versehen ist. Dieser bekannte einschalige Federlenker besitzt gegenüber den bekannten mehrschaligen Federlenkern ein geringeres Bauteilgewicht. Bei seiner Herstellung fallen Fertigungsschritte weg, die bei den mehrschaligen Federlenkern für die Herstellung und Eingliederung der zusätzlichen Schließ- und Überbrückungsbleche erforderlich sind.

Der vorliegenden Erfindung lag die Aufgabe zugrunde, einen Federlenker der eingangs genannten Art zur Verfügung zu stellen, der bei relativ geringem Bauteilgewicht sowie günstigen Herstellungskosten eine optimierte Radaufhängung durch eine Verteilung der Kräfte und Momente auf räumlich beabstandete Anbindungs- bzw. Anlenkpunkte ermöglicht und insbesondere verbesserte Federungseigenschaften bietet.

Zur Lösung dieser Aufgabe wird ein Federlenker mit den Merkmalen des Anspruchs 1 vorgeschlagen.

Der erfindungsgemäße einschalige Federlenker ist dadurch gekennzeichnet, dass an den Flanken seines breitenerweiterten Abschnitts nach innen umgeformte Flächenteile ausgebildet sind, deren Längskanten über ihre Gesamtlänge voneinander beabstandet sind, so dass der breitenerweiterte Abschnitt ein C-profilförmiges Querschnittsprofil aufweist, und dass zwischen dem Federsitz und dem zweiten Endabschnitt ein Verbindungsabschnitt zur Anbindung eines Stoßdämpfers ausgebildet ist. Der Federsitz befindet sich dabei vorzugsweise auf der Außenseite des Rückens des Federlenkers.

Durch die nach innen umgeformten Flächenteile der Flanken wird im Vergleich zu einschaligen Federlenkern mit nach außen gebogenem Kragen (Flanschen), bei gleichem Materialeinsatz eine höhere Bauteilsteifigkeit und Festigkeit erzielt. Dies ermöglicht bei gleichen Belastungsanforderungen an den Federlenker die Einsparung von Material. Untersuchungen seitens der Anmelderin haben ergeben, dass der Materialeinsatz zur Herstellung eines erfindungsgemäßen Federlenkers um ca. 10% gegenüber dem Materialeinsatz zur Herstellung eines herkömmlichen einschaligen Federlenkers mit nach außen gebogenen Flanschen (Krägen) reduziert werden kann. Die Reduzierung des Materialeinsatzes führt zu einer Gewichtseinsparung bei dem mit dem erfindungsgemäßen Federlenker ausgerüsteten Kraftfahrzeug und somit zu einer Reduzierung des Kraftstoffverbrauchs. Des Weiteren bewirkt die Reduzierung des Materialeinsatzes eine Reduzierung der Materialkosten. Der an dem Federlenker räumlich beabstandet von dem Federsitz ausgebildete Verbindungsabschnitt zur Anbindung eines Stoßdämpfers ermöglicht eine gleichmäßigere Verteilung der Kräfte und Momente auf den Federlenker sowie auf den zugeordneten Fahrzeugaufbau, so dass sich insgesamt eine verbesserte Radaufhängung ergibt. Diese Verteilung der Kräfte und Momente auf den Federlenker ermöglicht ebenfalls eine Reduzierung des Materialeinsatzes. Zudem ergeben sich durch die nach innen umgeformten Flächenteile der Flanken des erfindungsgemäßen Federlenkers kompakte Abmessungen, die zu einem kleineren Bauraumbedarf führen.

In einer vorteilhaften Ausgestaltung des erfindungsgemäßen Federlenkers weisen die nach innen umgeformten Flächenteile der Flanken zumindest über einen Abschnitt ihrer Länge in Richtung des Rückens. Diese Ausgestaltung verleiht dem Federlenker eine relativ hohe Steifigkeit sowie Festigkeit bei geringem Bauteilgewicht und kompakten Bauteilabmessungen. Durch eine entsprechende Profilierung der umgeformten Flächenteile der Flanken werden die Spannungen an den Beschnittkanten der umgeformten Flächenteile der Flanken verringert. Insbesondere lässt sich durch diese Ausgestaltung das Gewicht des Lenkers nochmals reduzieren.

Eine weitere vorteilhafte Ausgestaltung des erfindungsgemäßen Federlenkers ist dadurch gekennzeichnet, dass die nach innen umgeformten Flächenteile der Flanken zumindest über einen Abschnitt ihrer Länge in Richtung der Innenseiten der Flanken weisen. Auch diese Ausgestaltung verleiht dem Federlenker eine relativ hohe Steifigkeit sowie Festigkeit bei geringem Bauteilgewicht und kompakten Bauteilabmessungen. Durch eine entsprechende Profilierung der umgeformten Flächenteile der Flanken werden die Spannungen an den Beschnittkanten der umgeformten Flächenteile der Flanken verringert. Insbesondere lässt sich durch diese Ausgestaltung das Gewicht des Lenkers weiter reduzieren.

Nach einer weiteren bevorzugten Ausgestaltung des erfindungsgemäßen Federlenkers weisen die nach innen umgeformten Flächenteile der Flanken zumindest über einen Abschnitt ihrer Länge eine bogenförmige Profilform auf, deren Radius in Längsrichtung des Federlenkers variiert. Insbesondere in dieser Ausgestaltung zeichnet sich der erfindungsgemäße Federlenker durch eine relativ hohe Steifigkeit sowie Festigkeit bei geringem Bauteilgewicht und kompakten Bauteilabmessungen aus.

Eine weitere vorteilhafte Ausgestaltung des erfindungsgemäßen Federlenkers ist dadurch gekennzeichnet, dass die nach innen umgeformten Flächenteile der Flanken zumindest über einen Abschnitt ihrer Länge eine J-förmige oder winkelprofilförmige Profilform aufweisen, deren Breite in Längsrichtung des Federlenkers variiert. Auch in dieser Ausgestaltung zeichnet sich der erfindungsgemäße Federlenker durch eine relativ hohe Steifigkeit sowie Festigkeit bei geringem Bauteilgewicht und kompakten Bauteilabmessungen aus. Vorzugsweise schließt dabei die jeweilige Flanke mit dem zugehörigen nach innen umgeformten Flächenteil einen Winkel im Bereich von 80° bis 100°, vorzugsweise im Bereich von 85° bis 95° ein.

Eine weitere vorteilhafte Ausgestaltung des erfindungsgemäßen Federlenkers ist dadurch gekennzeichnet, dass der nach innen umgeformte Flächenteil der einen Flanke sich bezüglich seiner Profilform von der Profilform des nach innen umgeformten Flächenteils der anderen Flanke unterscheidet. In diesem Fall liegt eine individuelle Profilform je Flanke bzw. nach innen umgeformtem Flächenteil vor. Diese Ausgestaltung ermöglicht ein Optimum an Bauteilsteifigkeit sowie Festigkeit bei besonders geringem Bauteilgewicht und kompakten Bauteilabmessungen.

Ferner ist es fertigungstechnisch günstig, wenn der Federsitz nach einer weiteren bevorzugten Ausgestaltung des Federlenkers im Wesentlichen stufenlos in den ihn umgebenden Bereich des Federlenkerrückens übergeht.

Eine weitere vorteilhafte Ausgestaltung des erfindungsgemäßen Federlenkers sieht vor, dass der Verbindungsabschnitt zur Anbindung eines Stoßdämpfers miteinander fluchtende Öffnungen aufweist, die innerhalb von einander gegenüberliegenden, nach innen eingeformten Einstülpungen angeordnet sind. Die nach innen eingeformten Einstülpungen verbessern ebenfalls die Steifigkeit und Festigkeit des Federlenkers.

Eine weitere vorteilhafte Ausgestaltung des erfindungsgemäßen Federlenkers ist dadurch gekennzeichnet, dass die Flanken des breitenerweiterten Abschnitts durchgehend bis zu dem zweiten Endabschnitt verlaufen und einen gabelförmigen Lagerabschnitt zur Anbindung eines Radträgers sowie zur Anbindung des Stoßdämpfers definieren, wobei der gabelförmige Lagerabschnitt einen nischenförmigen Ausschnitt begrenzt, der sich von dem zweiten Endabschnitt bis mindestens zu dem der Anbindung des Stoßdämpfers dienenden Verbindungsabschnitt erstreckt. Durch die Anbindung des Stoßdämpfers an den Flanken der rinnenförmigen Federlenkerschale wird die Steifigkeit des Federlenkers weiter verbessert. Der in dem gabelförmigen Lagerabschnitt vorgesehene Ausschnitt, der sich mindestens bis zu dem der Anbindung des Stoßdämpfers dienenden Verbindungsabschnitt erstreckt, verringert das Bauteilgewicht des Federlenkers.

Für die Steifigkeit des Federlenkers ist es ferner von Vorteil, wenn gemäß einer weiteren bevorzugten Ausgestaltung an dem nischenförmigen Ausschnitt des zweiten Endabschnitts ein U-förmiger, nach außen gebogener Kragen ausgebildet ist. Der Kragen steht somit im montierten Zustand des Federlenkers entgegengesetzt zu den Flanken des Federlenkers nach oben vor.

Eine weitere vorteilhafte Ausgestaltung des erfindungsgemäßen Federlenkers sieht vor, dass sich die nach innen eingeformten Flansche ausgehend von einer Stelle, die zwischen dem Lagerabschnitt zur Anbindung eines Radträgers und dem Verbindungsabschnitt zur Anbindung eines Stoßdämpfers oder im Bereich des Verbindungsabschnitts zur Anbindung des Stoßdämpfers liegt, durchgehend bis zu dem Ende des Federlenkerrückens erstrecken, welches an den ersten Endabschnitt des Federlenkers angrenzt. Hierdurch lässt sich bei möglichst geringem Bauteilgewicht eine besonders hohe Festigkeit und Steifigkeit des Federlenkers erzielen.

Nach einer weiteren vorteilhaften Ausgestaltung des erfindungsgemäßen Federlenkers ist vorgesehen, dass die Flanken des breitenerweiterten Abschnittes durchgehend bis zu dem ersten Endabschnitt des Federlenkers verlaufen und einen gabelförmigen Lagerabschnitt zur Anbindung des Federlenkers an einem Fahrwerksträger definieren, wobei der gabelförmige Lagerabschnitt miteinander fluchtende Öffnungen mit Kragen zur Aufnahme einer Lagerbuchse aufweist und einen nischenförmigen Ausschnitt begrenzt, der sich mit einer Tiefe in Richtung des Federsitzes erstreckt, die größer als der Außendurchmesser des jeweiligen der Aufnahme der Lagerbuchse dienenden Kragens ist. Diese Kragen, die auch als Durchzüge bezeichnet werden können, sind vorzugsweise nach innen gerichtet, d.h. einander zugewandt. Der relativ tiefe nischenförmige Ausschnitt in Richtung des Federsitzes verringert wiederum das Bauteilgewicht des Federlenkers.

Der erfindungsgemäße Federlenker ist nach einer weiteren vorteilhaften Ausgestaltung aus Stahlblech hergestellt, welches eine Streckgrenze von mindestens 600 MPa, vorzugsweise mindestens 650 MPa aufweist. Für eine hohe Bauteilsteifigkeit bei geringem Bauteilgewicht ist es ferner günstig, wenn der erfindungsgemäße Federlenker nach einer weiteren bevorzugten Ausgestaltung aus Stahlblech mit einer Zugfestigkeit von mindestens 700 MPa, vorzugsweise von mindestens 800 MPa hergestellt ist. Insbesondere ist vorgesehen, den Federlenker aus hochfestem Complexphasen-Stahl herzustellen.

Nachfolgend wird die Erfindung anhand einer mehrere Ausführungsbeispiele darstellenden Zeichnung näher erläutert. Es zeigen:
- Fig. 1: einen erfindungsgemäßen Federlenker mit einer darauf abgestützten Feder, einem räumlich beabstandet dazu angebundenen Stoßdämpfer sowie einer Lagerbuchse, in perspektivischer Darstellung;
- Fig. 2: einen weiteren erfindungsgemäßen Federlenker, hier ohne Feder, Stoßdämpfer und Lagerbuchse, in perspektivischer Darstellung;
- Figuren 3 und 4: einen weiteren erfindungsgemäßen Federlenker (ohne Feder, Stoßdämpfer und Lagerbuchse), in perspektivischer Darstellung bzw. Unteransicht;
- Fig. 5: der Federlenker der Figuren 3 und 4 in einer Seitenansicht;
- Figuren 6 bis 9: Querschnittansichten des Federlenkers entlang den Schnittlinien A-A, B-B, C-C bzw. D-D in Fig. 5;
- Fig. 10: ein weiterer erfindungsgemäßer Federlenker in einer Seitenansicht;
- Figuren 11 bis 14: Querschnittansichten des Federlenkers entlang den Schnittlinien A-A, B-B, C-C bzw. D-D in Fig. 10;
- Figuren 15 bis 17: einen weiteren erfindungsgemäßen Federlenker (ohne Feder, Stoßdämpfer und Lagerbuchse), in perspektivischen Darstellungen bzw. Unteransicht;
- Fig. 18: der Federlenker der Figuren 15 bis 17 in einer Seitenansicht; und
- Figuren 19 bis 22: Querschnittansichten des Federlenkers entlang den Schnittlinien A-A, B-B, C-C bzw. D-D in Fig. 18.

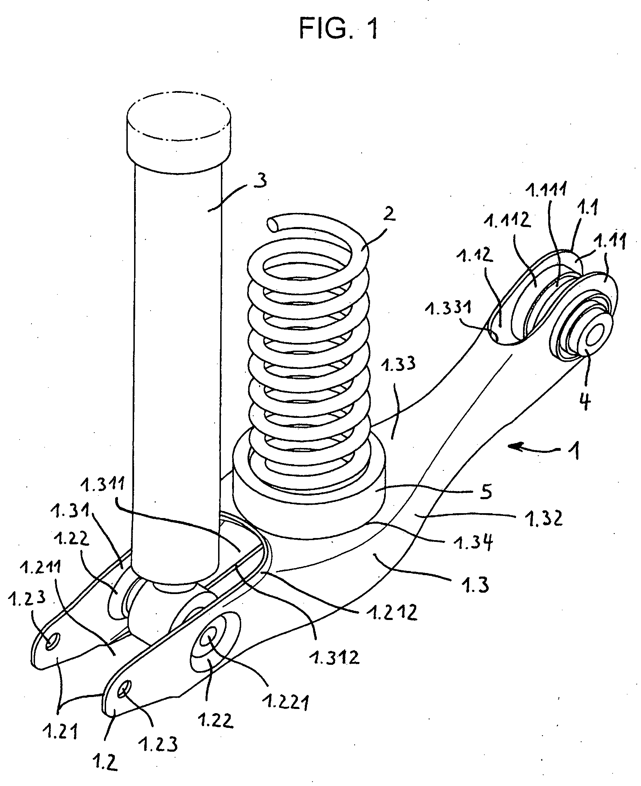

In der Zeichnung sind verschiedene Ausführungsbeispiele eines Federlenkers 1 für eine Radaufhängung eines Kraftfahrzeuges dargestellt. Der jeweilige Federlenker 1 ist als einschaliges Bauteil aus einer Metallplatine durch Umformen hergestellt. Er weist einen ersten Endabschnitt 1.1 zur Anbindung an einem Fahrwerksträger, vorzugsweise einem Hinterachsträger, und einen zweiten Endabschnitt 1.2 zur Anbindung an einem Radträger auf. Zwischen den beiden Endabschnitten 1.1, 1.2 ist ein breitenerweiterter Abschnitt 1.3 zur Abstützung einer Feder (Schraubenfeder) 2 ausgebildet (vgl. Fig. 1).

Der Federlenker 1 besteht vorzugsweise aus hochfestem Stahlblech. Das zu seiner Herstellung verwendete Metall- bzw. Stahlblech hat beispielsweise eine Streckgrenze von mindestens 650 MPa und eine Zugfestigkeit von mindestens 800 MPa.

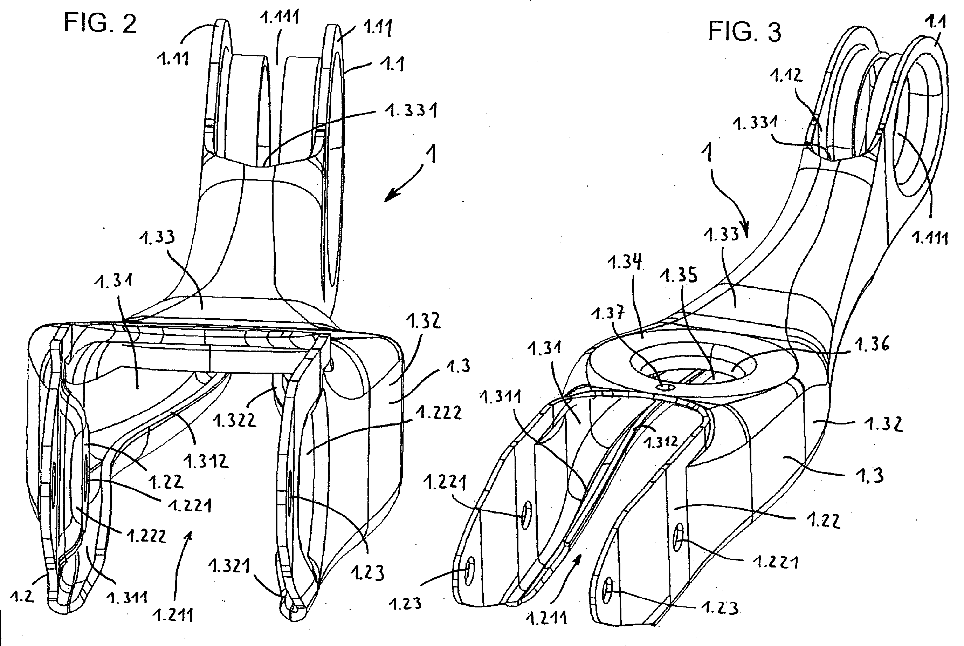

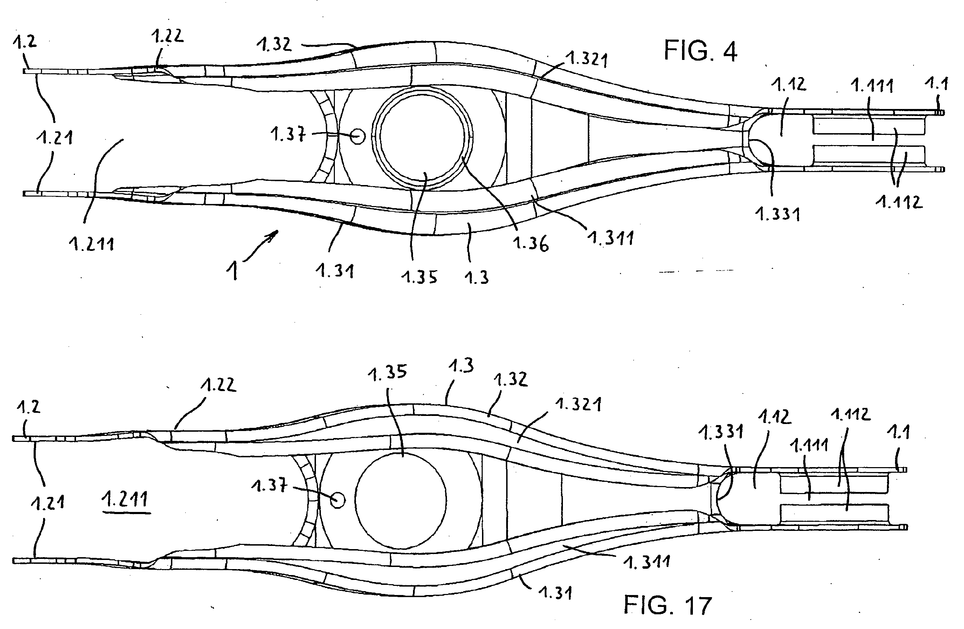

Der die Schraubenfeder 2 tragende, breitenerweiterte Abschnitt 1.3 des Federlenkers 1 ist im Wesentlichen rinnenförmig ausgebildet. Die Flanken 1.31, 1.32 der Rinne stehen gegenüber deren Mittelsteg (Rücken) 1.33 nach unten vor. Der Federsitz 1.34 bzw. die Aufnahme für eine Federunterlage befindet sich auf der Außenseite des Mittelsteges (Rückens) 1.33. Der Federsitz 1.34 geht im Wesentlichen stufenlos in den ihn umgebenden Bereich des Federlenkerrückens über. Innerhalb des Federsitzes 1.34 ist eine Öffnung 1.35 ausgeschnitten, an der vorzugsweise ein nach innen bzw. unten vorstehender Kragen 1.36 als Durchzug ausgebildet sein kann (vgl. Figuren 3 und 4). Es liegt aber auch im Rahmen der Erfindung, den Federsitz 1.34 als nach innen eingeformte ringförmige Einstülpung (nicht gezeigt) und/oder den Durchzug 1.36 als nach außen vorstehenden Kragen (nicht gezeigt) auszubilden.

Die Flanken 1.31, 1.32 des breitenerweiterten Abschnittes 1.3 verlaufen durchgehend bis zu dem radträgerseitigen Endabschnitt 1.2. Sie definieren einen gabelförmigen Lagerabschnitt 1.21 zur Anbindung eines Radträgers.

Des Weiteren weist der Federlenker 1 einen Verbindungsabschnitt 1.22 zur Anbindung eines Stoßdämpfers 3 auf (vgl. Fig. 1). Dieser Verbindungsabschnitt 1.22 ist räumlich beabstandet zwischen dem Federsitz 1.34 und dem radträgerseitigen Endabschnitt 1.2 des Federlenkers ausgebildet. Der Abschnitt 1.22 zur Anbindung des Stoßdämpfers liegt ebenfalls an dem gabelförmigen Lagerabschnitt 1.21, welcher der Radträgeranbindung dient. Er weist miteinander fluchtende Öffnungen 1.221 auf. Die Öffnungen 1.221 sind vorzugsweise innerhalb von einander gegenüberliegenden Einstülpungen 1.222 angeordnet (vgl. Fig. 2 und 3). Die Einstülpungen 1.222 sind nach innen eingeformt und beispielsweise kalottenförmig ausgebildet.

Der gabelförmige Lagerabschnitt 1.21 begrenzt einen nischenförmigen Ausschnitt 1.211, der zwischen dem Federsitz 1.34 und dem Verbindungsabschnitt 1.22 zur Anbindung des Stoßdämpfers beginnt und an dem radträgerseitigen Endabschnitt 1.2 mündet. An der Kante des nischenförmigen Ausschnitts 1.211 des Lenkerrückens 1.33 ist ein nach außen gebogener Kragen 1.212 ausgebildet, der entsprechend dem nischenförmigen Ausschnitt 1.211 U-förmig ausgebildet ist. Der Kragen 1.212 steht vom Rücken 1.33 abgewandt nach oben vor. Durch den Kragen 1.212 wird, die Festigkeit des Federlenkers bei minimiertem Bauteilgewicht erhöht.

Ferner ist zu erkennen, dass die Flanken 1.31, 1.32 des breitenerweiterten Abschnitts 1.3 des Federlenkers auch durchgehend bis zu dem Endabschnitt 1.1 verlaufen, mit dem der Federlenker 1 an einem Hinterachsträger oder einem anderen Fahrwerksträger angelenkt wird. Die Flanken 1.31, 1.32 definieren dort wiederum einen gabelförmigen Lagerabschnitt 1.11, der miteinander fluchtende Öffnungen 1.111 mit Kragen 1.112 zur Aufnahme einer Lagerbuchse 4, vorzugsweise eines Gummimetalllagers aufweist (siehe Fig. 1). Die Kragen 1.112 sind als Durchzüge der Öffnungen 1.111 hergestellt und vorzugsweise nach innen gerichtet, d.h. einander zugewandt. Diese Durchzüge (Kragen) 1.112 können jedoch auch nach außen gerichtet werden.

Der einem Hinterachsträger zugeordnete Endabschnitt 1.1 des Federlenkers 1 weist ebenfalls einen nischenförmigen Ausschnitt 1.12 auf, der zum dortigen Ende des Federlenkers 1 hin mündet. Der Ausschnitt 1.12 des Federlenkerrückens 1.33 erstreckt sich vom Ende des Federlenkers 1 in Richtung des Federsitzes 1.34 mit einer Tiefe, die vorzugsweise größer als der Durchmesser der der Aufnahme der Lagerbuchse dienenden Öffnung 1.111 misst.

Die Flanken 1.31, 1.32 des einschaligen, rinnenförmigen Federlenkers 1 sind im unteren Profilbereich nach innen gebogen, so dass dort nach innen umgeformte Flächenteile 1.311, 1.321 ausgebildet sind. Die nach innen gebogenen Flächenteile 1.311, 1.321 verlaufen jeweils durchgehend zwischen den beiden Endabschnitten 1.1, 1.2, wobei die Längskanten (Beschnittkanten) 1.312, 1.322 der Flächenteile 1.311, 1.321 über ihre Gesamtlänge voneinander beabstandet sind (siehe insbesondere Figuren 4 und 17). Schließ- oder Brückenbleche, welche (wie bei bekannten Federlenkern) die Flanken bzw. Flansche miteinander verbinden, sind bei dem erfindungsgemäßen einschaligen Federlenker 1 nicht vorhanden.

Die nach innen eingeformten Flächenteile 1.311, 1.321 des erfindungsgemäßen Federlenkers 1 erstrecken sich ausgehend von einer Stelle, die zwischen dem Lagerabschnitt 1.21 zur Anbindung eines Radträgers und dem Abschnitt 1.22 zur Anbindung eines Stoßdämpfers liegt, durchgehend bis zu dem Ende 1.331 des Federlenkerrückens 1.33, welches an den ersten Endabschnitt 1.1 des Federlenkers 1 angrenzt. Die Breite der nach innen eingeformten Flächenteile ändert sich über ihre Länge. Ihre größte Breite besitzen die Flächenteile 1.311, 1.321 vorzugsweise im Bereich des Federsitzes 1.34.

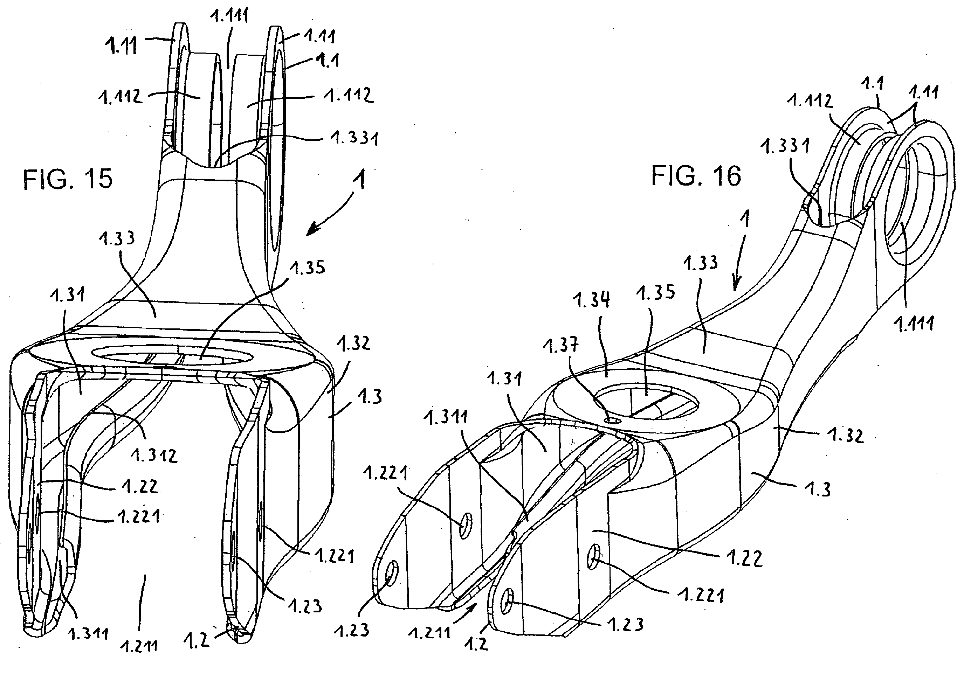

Die nach innen eingeformten Flächenteile 1.311, 1.321 können im Wesentlichen nach Art von Flanschen ausgebildet sein. Vorzugsweise sind die nach innen umgeformten Flächenteile 1.311, 1.321 der Flanken 1.31, 1.32 aber so umgeformt, dass sie zumindest über einen Abschnitt ihrer Länge in Richtung des Rückens 1.33 und/oder in Richtung der Innenseiten der Flanken 1.31, 1.32 weisen (vgl. Figuren 2 bis 22). Der breitenerweiterte Abschnitt 1.3 des Federlenkers weist somit insbesondere im Bereich des Federsitzes 1.34 bzw. des Rückens 1.33 ein im Wesentlichen C-profilförmiges Querschnittsprofil auf.

Bei den in den Figuren 2 und 3 bis 9 dargestellten Ausführungsbeispielen sind die nach innen umgeformten Flächenteile 1.311, 1.321 der Flanken 1.31, 1.32 im Wesentlichen bogenförmig ausgebildet. Sie weisen zumindest über einen Abschnitt ihrer Länge eine bogenförmige Profilform auf, deren Radius R in Längsrichtung des Federlenkers 1 variiert. Die Beschnittkanten (Längskanten) 1.312, 1.322 der nach innen umgeformten Flächenteile 1.311, 1.321 weisen dabei in Richtung des Federlenkerrückens 1.33.

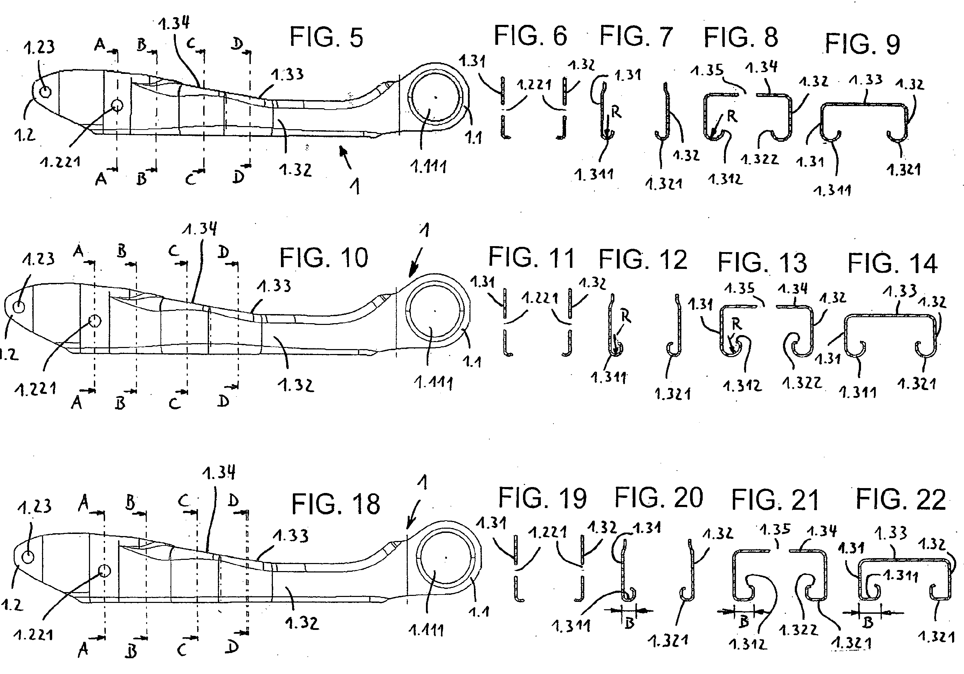

Bei dem in den Figuren 10 bis 14 dargestellten Ausführungsbeispiel sind die nach innen umgeformten Flächenteile 1.311, 1.321 der Flanken 1.31, 1.32 ebenfalls im Wesentlichen bogenförmig ausgebildet. Auch weisen sie über einen Abschnitt ihrer Länge eine bogenförmige Profilform auf, deren Radius R in Längsrichtung des Federlenkers 1 variiert. Die Beschnittkanten (Längskanten) 1.312, 1.322 der nach innen umgeformten Flächenteile 1.311, 1.321 weisen bei diesem Ausführungsbeispiel allerdings in Richtung der Innenseiten der Flanken 1.31, 1.32.

Auch bei dem in den Figuren 18 bis 22 dargestellten Ausführungsbeispiel sind die nach innen umgeformten Flächenteile 1.311, 1.321 der Flanken 1.31, 1.32 zusätzlich in Richtung der Innenseiten der Flanken 1.31, 1.32 umgeformt oder eingerollt. Die Flächenteile 1.311, 1.321 besitzen zumindest über einen Abschnitt ihrer Länge eine J-förmige oder winkelprofilförmige Profilform, deren Breite B in Längsrichtung des Federlenkers variiert. Der jeweilige Flächenteil 1.311, 1.321 schließt dabei mit der zugehörigen Flanke 1.31, 1.32 einen Winkel im Bereich von 85° bis 95° ein. Vorzugsweise beträgt dieser Winkel ca. 90°.

Wie insbesondere den Figuren 4 und 17 entnommen werden kann, ist der Abstand der Längskanten 1.312, 1.322 der nach innen eingeformten Flächenteile 1.311, 1.321 im Bereich des Federsitzes 1.34 größer oder gleich dem Durchmesser der Öffnung 1.35 bzw. dem Außendurchmesser des an der Öffnung 1.35 nach innen vorstehenden Kragens 1.36.

Im Mittelsteg (Rücken) 1.33 der Federlenkerschale 1 ist im Bereich des Federsitzes 1.34 eine Öffnung 1.37 ausgeschnitten, die der Fixierung sowie Ausrichtung eines aus Gummi oder Kunststoff hergestellten Federunterlage 5 dient (vgl. Fig. 1). Die Federunterlage 5 optimiert die Auflage der auf dem Federlenker 1 abgestützten Schraubenfeder 2.

Der Federlenkerrücken 1.33 ist zwischen dem fahrzeugaufbauseitigen Endabschnitt 1.1 und dem Federsitz 1.34 bogenförmig ausgebildet, so dass die Außenseite des Rückens 1.33 dort eine konkave Krümmung in Bezug auf die Längserstreckung des Federlenkers 1 besitzt (vgl. Fig. 5, 10 und 18). Die Höhe der seitlichen Flanken 1.31, 1.32 des C-förmigen Profils nimmt dabei ausgehend von dem Federsitz 1.34 in Richtung des fahrzeugaufbauseitigen Endabschnitts 1.1 des Federlenkers 1 zunächst allmählich ab, erreicht zwischen Federsitz 1.34 und Endabschnitt 1.1 bzw. dem nischenförmigen Ausschnitt 1.12 ihr Minimum und nimmt dann in Richtung des Endabschnitts 1.1 bzw. des nischenförmigen Ausschnitts 1.12 wieder allmählich zu (vgl. insbesondere Fig. 5, 8, 9; 10, 13, 14; 18, 21 und 22).

Der erfindungsgemäße Federlenker 1 zeichnet sich durch ein geringes Bauteilgewicht sowie günstige Herstellungskosten aus und bietet eine optimierte Radaufhängung durch eine Verteilung der Kräfte und Momente auf räumlich beabstandete Anbindungs- bzw. Anlenkpunkte. Er ist insbesondere für eine Mehrlenker-Hinterachse geeignet.

Die Ausführung des erfindungsgemäßen Federlenkers ist nicht auf die in der Zeichnung dargestellten Ausführungsbeispiele beschränkt. Vielmehr sind zahlreiche Varianten denkbar, die auch bei von den dargestellten Ausführungsbeispielen abweichender Ausführung von der in den Ansprüchen angegebenen Erfindung Gebrauch machen. So können beispielsweise auch die fluchtenden Öffnungen 1.23 zur radträgerseitigen Anbindung als Durchzüge mit nach innen oder außen vorstehendem Kragen ausgebildet sein. Insbesondere liegt es im Rahmen der vorliegenden Erfindung, Merkmale der hier dargestellten verschiedenen Ausführungsbeispiele des erfindungsgemäßen Federlenkers miteinander zu kombinieren.

## Patentansprüche

1. Aus Stahlblech geformter einschaliger Federlenker (1) für eine Radaufhängung eines Kraftfahrzeuges, mit einem ersten Endabschnitt (1.1) zur Anbindung an einem Fahrwerksträger, vorzugsweise einem Hinterachsträger, einem zweiten Endabschnitt (1.2) zur radseitigen Anbindung und einem zwischen den beiden Endabschnitten (1.1, 1.2) angeordneten breitenerweiterten Abschnitt (1.3), der einen Rücken (1.33) mit davon abstehenden Flanken (1.31, 1.32) aufweist und einen Federsitz (1.34) zur Abstützung einer Feder definiert, **dadurch gekennzeichnet, dass** an den Flanken (1.31, 1.32) nach innen umgeformte Flächenteile (1.311, 1.321) ausgebildet sind, deren Längskanten (1.312, 1.322) über ihre Gesamtlänge voneinander beabstandet sind, so dass der breitenerweiterte Abschnitt (1.3) ein C-profilförmiges Querschnittsprofil aufweist, und dass zwischen dem Federsitz (1.34) und dem zweiten Endabschnitt (1.2) ein Verbindungsabschnitt (1.22) zur Anbindung eines Stoßdämpfers ausgebildet ist.

2. Federlenker nach Anspruch 1, **dadurch gekennzeichnet, dass** die nach innen umgeformten Flächenteile (1.311, 1.321) der Flanken (1.31, 1.32) zumindest über einen Abschnitt ihrer Länge in Richtung des Rückens (1.33) weisen.

3. Federlenker nach Anspruch 1 oder 2, **dadurch gekennzeichnet, dass** die nach innen umgeformten Flächenteile (1.311, 1.321) der Flanken (1.31, 1.32) zumindest über einen Abschnitt ihrer Länge in Richtung der Innenseiten der Flanken (1.31, 1.32) weisen.

4. Federlenker nach einem der Ansprüche 1 bis 3, **dadurch gekennzeichnet, dass** die nach innen umgeformten Flächenteile (1.311, 1.321) der Flanken (1.31, 1.32) zumindest über einen Abschnitt ihrer Länge eine bogenförmige Profilform aufweisen, deren Radius (R) in Längsrichtung des Federlenkers variiert.

5. Federlenker nach einem der Ansprüche 1 bis 4, **dadurch gekennzeichnet, dass** die nach innen umgeformten Flächenteile (1.311, 1.321) der Flanken (1.31, 1.32) zumindest über einen Abschnitt ihrer Länge eine J-förmige oder winkelprofilförmige Profilform aufweisen, deren Breite (B) in Längsrichtung des Federlenkers variiert.

6. Federlenker nach Anspruch 5, **dadurch gekennzeichnet, dass** die jeweilige Flanke (1.31, 1.32) mit dem zugehörigen nach innen umgeformten Flächenteil (1.311, 1.321) einen Winkel im Bereich von 80° bis 100° einschließt.

7. Federlenker nach einem der Ansprüche 1 bis 6, **dadurch gekennzeichnet, dass** der nach innen umgeformte Flächenteil (1.311) der einen Flanke (1.31) sich bezüglich seiner Profilform von der Profilform des nach innen umgeformten Flächenteils (1.321) der anderen Flanke (1.32) unterscheidet.

8. Federlenker nach einem der Ansprüche 1 bis 7, **dadurch gekennzeichnet, dass** der Verbindungsabschnitt (1.22) zur Anbindung eines Stoßdämpfers miteinander fluchtende Öffnungen (1.221) aufweist, die innerhalb von einander gegenüberliegenden, nach innen eingeformten Einstülpungen (1.222) angeordnet sind.

9. Federlenker nach einem der Ansprüche 1 bis 8, **dadurch gekennzeichnet, dass** die Flanken (1.31, 1.32) des breitenerweiterten Abschnittes (1.3) durchgehend bis zu dem zweiten Endabschnitt (1.2) verlaufen und einen gabelförmigen Lagerabschnitt (1.21) zur Anbindung eines Radträgers sowie zur Anbindung des Stoßdämpfers definieren, wobei der gabelförmige Lagerabschnitt (1.21) einen nischenförmigen Ausschnitt (1.211) begrenzt, der sich von dem zweiten Endabschnitt (1.2) bis mindestens zu dem der Anbindung des Stoßdämpfers dienenden Verbindungsabschnitt (1.22) erstreckt.

10. Federlenker nach Anspruch 9, **dadurch gekennzeichnet, dass** an dem nischenförmigen Ausschnitt (1.211) ein U-förmiger, nach außen gebogener Kragen (1.212) ausgebildet ist.

11. Federlenker nach einem der Ansprüche 1 bis 10, **dadurch gekennzeichnet, dass** sich die nach innen umgeformten Flächenteile (1.311, 1.321) ausgehend von einer Stelle, die zwischen dem Lagerabschnitt (1.21) zur Anbindung eines Radträgers und dem Verbindungsabschnitt (1.22) zur Anbindung eines Stoßdämpfers oder im Bereich des Verbindungsabschnitts (1.22) zur Anbindung des Stoßdämpfers liegt, durchgehend bis zu dem Ende des Federlenkerrückens (1.33) erstrecken, welches an den ersten Endabschnitt (1.1) des Federlenkers angrenzt.

12. Federlenker nach einem der Ansprüche 1 bis 11, **dadurch gekennzeichnet, dass** die Flanken (1.31, 1.32) des breitenerweiterten Abschnittes (1.3) durchgehend bis zu dem ersten Endabschnitt (1.1) verlaufen und einen gabelförmigen Lagerabschnitt (1.11) zur Anbindung des Federlenkers (1) an einem Fahrwerksträger definieren, wobei der gabelförmige Lagerabschnitt (1.11) miteinander fluchtende Öffnungen (1.111) mit Kragen (1.112) zur Aufnahme einer Lagerbuchse aufweist und einen nischenförmigen Ausschnitt (1.12) begrenzt, der sich mit einer Tiefe in Richtung des Federsitzes (1.34) erstreckt, die größer als der Außendurchmesser des jeweiligen der Aufnahme der Lagerbuchse dienenden Kragens (1.112) ist.

13. Federlenker nach einem der Ansprüche 1 bis 12, **dadurch gekennzeichnet, dass** er aus Stahlblech mit einer Streckgrenze von mindestens 600 MPa, vorzugsweise von mindestens 650 MPa hergestellt ist.

14. Federlenker nach einem der Ansprüche 1 bis 13, **dadurch gekennzeichnet, dass** er aus Stahlblech mit einer Zugfestigkeit von mindestens 700 MPa, vorzugsweise von mindestens 800 MPa hergestellt ist.

## Claims

1. Single-shell spring control arm (1), formed from sheet steel, for a wheel suspension of a motor vehicle, comprising a first end portion (1.1) for attaching to a chassis beam, preferably a rear axle beam, a second end portion (1.2) for attaching on the wheel-side and an increased-width portion (1.3) which is arranged between the two end portions (1.1, 1.2), and which comprises a spine (1.33) having flanks (1.31,1.32) projecting therefrom and which defines a spring seat (1.34) for supporting a spring, **characterised in that** inwardly deformed surface parts (1.311,1.321) are formed on the flanks (1.31,1.32), the longitudinal edges (1.312, 1.322) of which surface parts are spaced apart from one another along their entire length so that the increased-width portion (1.3) has a C-profile-shaped cross-sectional profile, and **in that** a connection portion (1.22) for attaching a shock absorber is formed between the spring seat (1.34) and the second end portion (1.2).

2. Spring control arm according to claim 1, **characterised in that** the inwardly deformed surface parts (1.311, 1.321) of the flanks (1.31, 1.32) point towards the spine (1.33) over at least a portion of their length.

3. Spring control arm according to either claim 1 or claim 2, **characterised in that** the inwardly deformed surface parts (1.311, 1.321) of the flanks (1.31, 1.32) point towards the inner sides of the flanks (1.31, 1.32) over at least a portion of their length.

4. Spring control arm according to any of claims 1 to 3, **characterised in that** the inwardly deformed surface parts (1.311,1.321) of the flanks (1.31, 1.32) have an arcuate profile shape over at least a portion of their length, the radius (R) of said profile shape varying in the longitudinal direction of the spring control arm.

5. Spring control arm according to any of claims 1 to 4, **characterised in that** the inwardly deformed surface parts (1.311,1.321) of the flanks (1.31, 1.32) have a J-shaped or angle-profile shaped profile shape over at least a portion of their length, the width (B) of said profile shape varying in the longitudinal direction of the spring control arm.

6. Spring control arm according to claim 5, **characterised in that** the respective flank (1.31,1.32) encloses an angle in the range of from 80° to 100° with the associated inwardly deformed surface part (1.311, 1.321).

7. Spring control arm according to any of claims 1 to 6, **characterised in that** the inwardly deformed surface part (1.311) of one flank (1.31) differs in terms of its profile shape from the profile shape of the other inwardly deformed surface part (1.321) of the other flank (1.32).

8. Spring control arm according to any of claims 1 to 7, **characterised in that** the connection portion (1.22) for attaching a shock absorber comprises mutually aligned openings (1.221) which are arranged within opposing, inwardly shaped indentations (1.222).

9. Spring control arm according to any of claims 1 to 8, **characterised in that** the flanks (1.31,1.32) of the increased-width portion (1.3) extend continuously up to the second end portion (1.2) and define a fork-shaped bearing portion (1.21) for attaching a wheel carrier and for attaching the shock absorber, the fork-shaped bearing portion (1.21) delimiting a recess-shaped cut-out (1.211) which extends from the second end portion (1.2) at least up to the connection portion (1.22) that is used to attach the shock absorber.

10. Spring control arm according to claim 9, **characterised in that** a U-shaped, outwardly bent collar (1.212) is formed on the recess-shaped cut-out (1.211).

11. Spring control arm according to any of claims 1 to 10, **characterised in that** the inwardly deformed surface parts (1.311, 1.321) extend continuously up to the end of the spring control arm spine (1.33), which abuts the first end portion (1.1) of the spring control arm, starting from a point that is either between the bearing portion (1.21) for attaching a wheel carrier and the connection portion (1.22) for attaching a shock absorber or in the region of the connection portion (1.22) for attaching the shock absorber.

12. Spring control arm according to any of claims 1 to 11, **characterised in that** the flanks (1.31, 1.32) of the increased-width portion (1.3) extend continuously up to the first end portion (1.1) and define a fork-shaped bearing portion (1.11) for attaching the spring control arm (1) to a chassis beam, the fork-shaped bearing portion (1.11) comprising mutually aligned openings (1.111) having collars (1.112) for receiving a bearing bushing, and delimiting a recess-shaped cut-out (1.12) which extends towards the spring seat (1.34) at a depth that is greater than the outer diameter of the respective collar (1.112) that is used to receive the bearing bushing.

13. Spring control arm according to any of claims 1 to 12, **characterised in that** said spring control arm is produced from sheet steel having a yield strength of at least 600 MPa, preferably of at least 650 MPa.

14. Spring control arm according to any of claims 1 to 13, **characterised in that** said spring control arm is produced from sheet steel having a tensile strength of at least 700 MPa, preferably of at least 800 MPa.

## Revendications

1. Bras de suspension élastique monobloc (1), fabriqué en tôle d'acier, pour une suspension élastique de roue d'un véhicule automobile, avec une première section finale (1.1), pour le rattachement à un support de châssis, de préférence à un support de l'essieu arrière, une deuxième section finale (1.2), pour le rattachement côté roue, et une section élargie (1.3), disposée entre les deux sections finale (1.1, 1.2), qui est dotée d'un dos (1.33), avec des flancs (1.31, 1.32) en saillie de celui-ci, et qui définit un siège de ressort (1.34) pour soutenir un ressort, **caractérisé en ce que**, sur les flancs (1.31, 1.32), sont formées des pièces déformées vers l'intérieur (1.311, 1.321), dont les bords longitudinaux (1.312, 1.322) sont distancés l'un de l'autre, sur toute leur longueur, de telle manière que la section élargie (1.3) présente un profil de section transversale en forme de C, et que, pour le rattachement d'un amortisseur de choc, une section de liaison (1.22) soit formée entre le siège de ressort (1.34) et la deuxième section finale (1.2).

2. Bras de suspension élastique selon la revendication 1, **caractérisé en ce que** les pièces déformées vers l'intérieur (1.311, 1.321) des flancs (1.31, 1.32) sont orientées, au moins sur une partie de leur longueur, dans la direction du dos (1.33).

3. Bras de suspension élastique selon revendication 1 ou 2, **caractérisé en ce que** les pièces déformées vers l'intérieur (1.311, 1.321) des flancs (1.31, 1.32) sont orientées, au moins sur une partie de leur longueur, dans la direction des faces intérieures des flancs (1.31, 1.32).

4. Bras de suspension élastique selon l'une des revendications 1 à 3, **caractérisé en ce que** les pièces déformées vers l'intérieur (1.311, 1.321) des flancs (1.31, 1.32) sont dotées, au moins sur une partie de leur longueur, d'un profil en forme d'arc dont le rayon (R) varie dans la direction longitudinale du bras de suspension élastique.

5. Bras de suspension élastique selon l'une des revendications 1 à 4, **caractérisé en ce que** les pièces déformées vers l'intérieur (1.311, 1.321) des flancs (1.31, 1.32) sont dotées, au moins sur une partie de leur longueur, d'un profil en forme de J ou d'angle, dont la largeur (B) varie dans la direction longitudinale du bras de suspension élastique.

6. Bras de suspension élastique selon la revendication 5, **caractérisé en ce que** chacun des flancs (1.31, 1.32) forme, avec la pièce déformées vers l'intérieur (1.311, 1.321) y associée, un angle situé dans une plage de 80 ° à 100 °.

7. Bras de suspension élastique selon l'une des revendications 1 à 6, **caractérisé en ce que** la pièce déformée vers l'intérieur (1.311) de l'un (1.31) des flancs est dotée d'une forme de profil qui diffère de la forme de profil de la pièce déformée vers l'intérieur (1.321) de l'autre flanc (1.32).

8. Bras de suspension élastique selon l'une des revendications 1 à 7, **caractérisé en ce que** la section de liaison (1.22), destinée au rattachement d'un amortisseur de choc, est dotée d'ouvertures (1.221), qui, en alignement les unes par rapport aux autres, sont disposées à l'intérieur de bosses (1.222) formés vers l'intérieur.

9. Bras de suspension élastique selon l'une des revendications 1 à 8, **caractérisé en ce que** les flancs (1.31, 1.32) de la section élargie (1.3) s'étendent en continu jusqu'à la deuxième section finale (1.2) et définissent une section d'appui (1.21) en forme de fourche, qui est destinée au rattachement d'un support de roue ainsi qu'au rattachement de l'amortisseur de choc, sachant que la section d'appui (1.21) en forme de fourche limite une découpe en forme de niche (1.211) qui s'étend de la deuxième section finale (1.2) au moins jusqu'à la section de liaison (1.22) servant au rattachement de l'amortisseur de choc.

10. Bras de suspension élastique selon la revendication 9, **caractérisé en ce que**, sur la découpe en forme de niche (1.211), est formée une collerette (1.212), courbée vers l'extérieur.

11. Bras de suspension élastique selon l'une des revendications 1 à 10, **caractérisé en ce que** les pièces déformées vers l'intérieur (1.311, 1.321) s'étendent en continu, à partir d'un endroit, situé entre la section d'appui (1.21), destinée au rattachement d'un support de roue, et la section de liaison (1.22), destinée au rattachement d'un amortisseur de choc, ou dans la région de la section de liaison (1.22), destinée au rattachement de l'amortisseur de choc, jusqu'à la fin du dos (1.33) du bras de suspension élastique, adjacent à la première section finale (1.1).

12. Bras de suspension élastique selon l'une des revendications 1 à 11, **caractérisé en ce que** les flancs (1.31, 1.32) de la section élargie (1.3) s'étendent en continu jusqu'à la première section finale (1.1) et définissent une section d'appui (1.11) en forme de fourche, qui est destinée à relier le bras de suspension élastique (1) à un support de châssis, sachant que la section d'appui (1.11) en forme de fourche est dotée d'ouvertures (1.111), disposées en alignement les unes par rapport aux autres, avec collerette (1.112), pour la réception d'un coussinet, et limite une découpe en forme de niche (1.12) qui s'étend dans la direction du siège de ressort (1.34), à une profondeur supérieure au diamètre extérieur de la collerette (1.112) respective, qui sert de réceptacle pour le coussinet.

13. Bras de suspension élastique selon l'une des revendications 1 à 12, **caractérisé en ce que** ledit bras est fabriqué en tôle d'acier dont la limite d'élasticité est d'au moins 600 MPa, de préférence d'au moins 650 MPa.

14. Bras de suspension élastique selon l'une des revendications 1 à 13, **caractérisé en ce que** ledit bras est fabriqué en tôle d'acier dont la résistance à la traction est d'au moins 700 MPa, de préférence d'au moins 800 MPa.
